# EUROPEAN PATENT SPECIFICATION

(11) **EP 2 275 237 B1**
(45) Date of publication and mention of the grant of the patent: **20.11.2013**
(21) Application number: 10169561.7
(22) Date of filing: 14.07.2010
(51) Int. Cl.: B27C 9/02

(54) **Machining centre for beams, particularly for machining wood beams and the like**
Bearbeitungsmachine für Träger, insbesondere für Träger aus Holz oder aus ähnlichem Material
Machine pour le travail des poutres, particulièrement pour l'usinage de poutres en bois et en matériaux similaires.

(30) Priority: 17.07.2009 IT PD20090203
(43) Date of publication of application: 19.01.2011
(73) Proprietor: Essetre Holding SpA, 36016 Thiene (VI) (IT)
(72) Inventor: Sella, Andrea, 36035 Marano Vicentino VI (IT)
(74) Representative: Modiano, Micaela Nadia

(56) References cited:
- EP-A2- 1 925 411
- DE-A1- 1 652 387
- DE-A1- 4 301 217
- DE-A1-102004 022 598
- DE-C1- 19 733 457
- FR-A1- 2 578 777

## Description

The present invention relates to a machining centre for beams, particularly for machining wood beams and the like according to the preamble of claim 1.

Such a machining centre is known from document FR 2 578 777 A1.

Nowadays machining centres for machining wood beams, which have a portal-like shell mounted on a base, are widely known.

On the crossbar of the portal-like shell there are sliding guides for a trolley that carries an arm at the free end of which a machining head is mounted.

The machining head comprises a fork-type support, which is axially rotatable, in which a tool holder assembly is hinged, so that it can be oriented, which is generally provided with one or more spindles for mills.

The arm is associated slideably on guides provided on the trolley, in such a way that, by means of the coordinated movement of the trolley on the crossbar and of the arm on the trolley, the machining head can be arranged in preselected working positions in the working area which corresponds to the bay of the portal.

Advancement sliders are equipped to support a beam to be machined by holding it in position in the bay of the portal and, by means of this, impressing advancements upon it that are functional to the type of preselected processing.

With this type of machine, however, it is not possible to orientate the tool holder assembly so as to allow processing of the lower face of the beam.

To process this face, currently the beam is rotated by means of a device that is integrated in the advancement sliders and which entirely disadvantages the structural economy of this type of machining centre.

Indeed, nowadays there is a particularly pressing need to simplify the structure of machining centres, thus making possible an economy of their encumbrance and of their fabrication.

FR 2 578 777 A1 discloses an installation for automatically cutting frameworks comprising two ensemble lines which are movable mounted along two horizontal parallel axes constituting the axes of two conveyor systems. One ensemble line includes a gripping device for a long piece of wood and the other ensemble line includes a plurality of moveable carts various tools such as a radial arm saw, a milling machine, a mortise, and an auger. The gripping device includes a rotatable ring supporting four rotatable clamps for gripping and rotating the wood piece.

The aim of the present invention is to provide a machining centre for beams, particularly for machining wood beams and the like, that satisfies this need by being structurally simpler than the machining centres known today.

Within this aim, an object of the invention is to provide a machining centre that enables the processing of all of the faces of a beam, as well as the heads, without requiring the rotation of the beam on the advancement sliders.

A further object of the invention is to propose a machining centre that is versatile and easy to use, and which can be produced at relatively low cost.

In accordance with the invention, there is provided a machining centre for beams, as defined in the appended claims.

Further characteristics and advantages of the invention will become better apparent from the following detailed description of a preferred, but not exclusive, embodiment of the machining centre according to the invention, illustrated by way of a non-limiting example in the accompanying drawings, wherein:

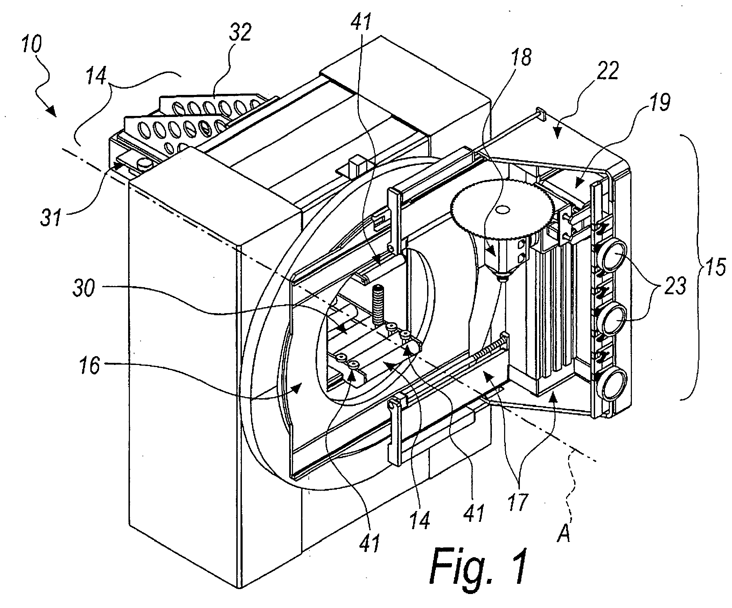

Figure 1 is a perspective view of a machining centre according to the invention;

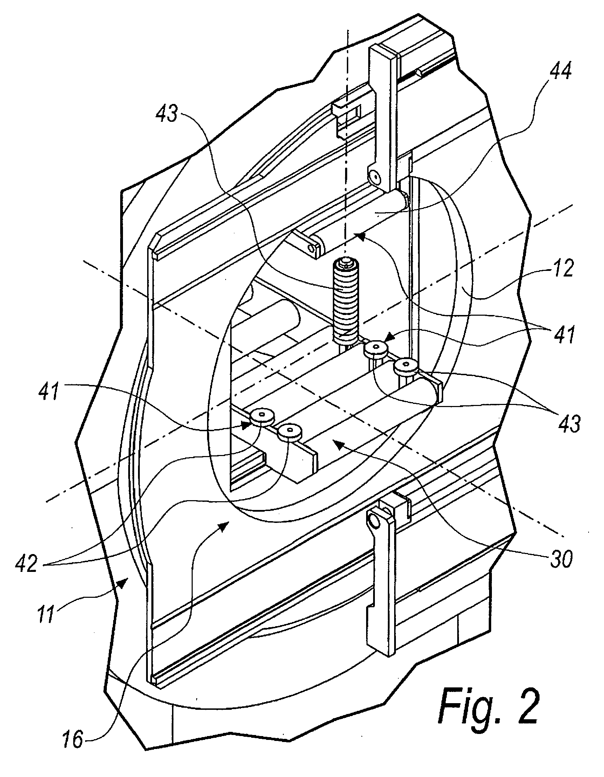

Figure 2 is an enlarged detailed perspective view of a machining centre according to the invention;

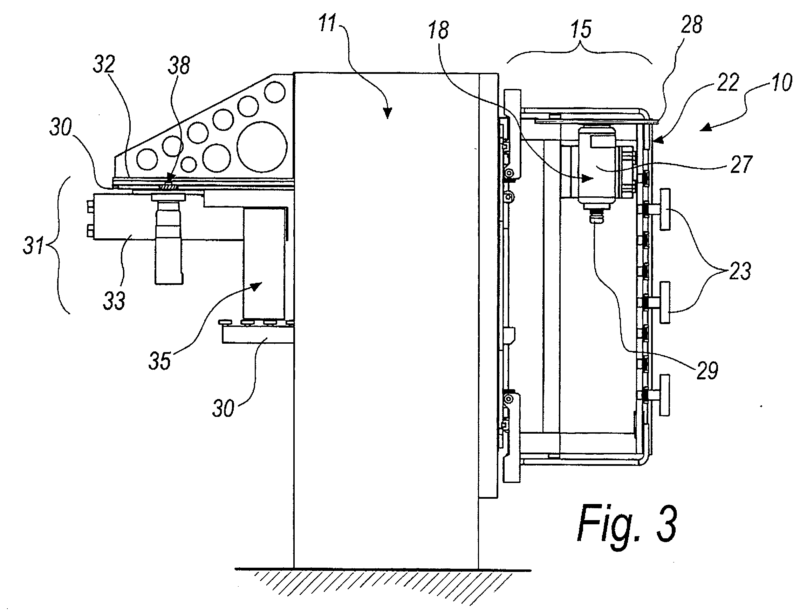

Figure 3 is a side elevation view of the machining centre according to the invention;

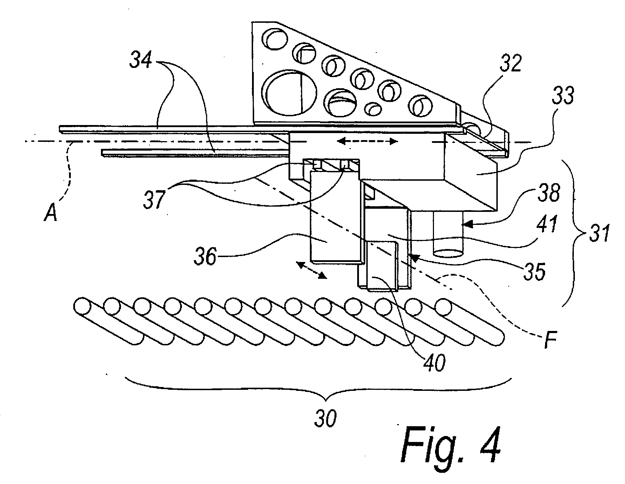

Figure 4 is a partial perspective diagram of a machining centre, according to the invention;

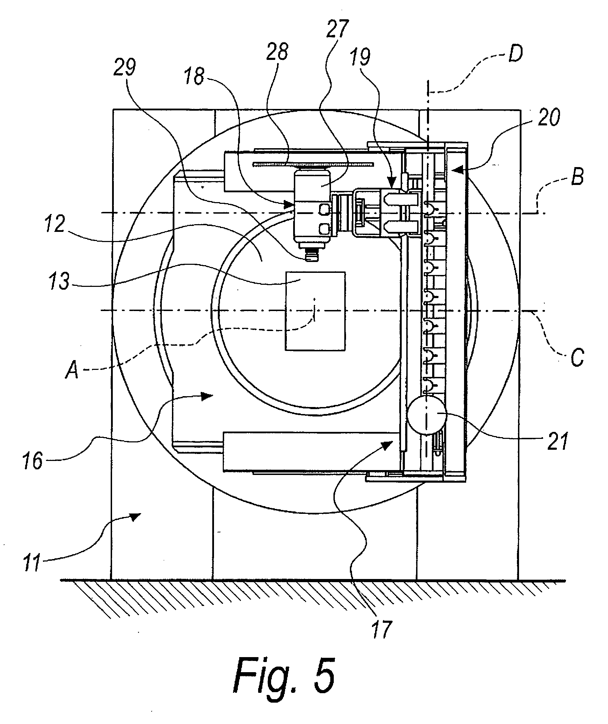

Figure 5 is a front view of a simplified partial diagram of a machining centre according to the invention;

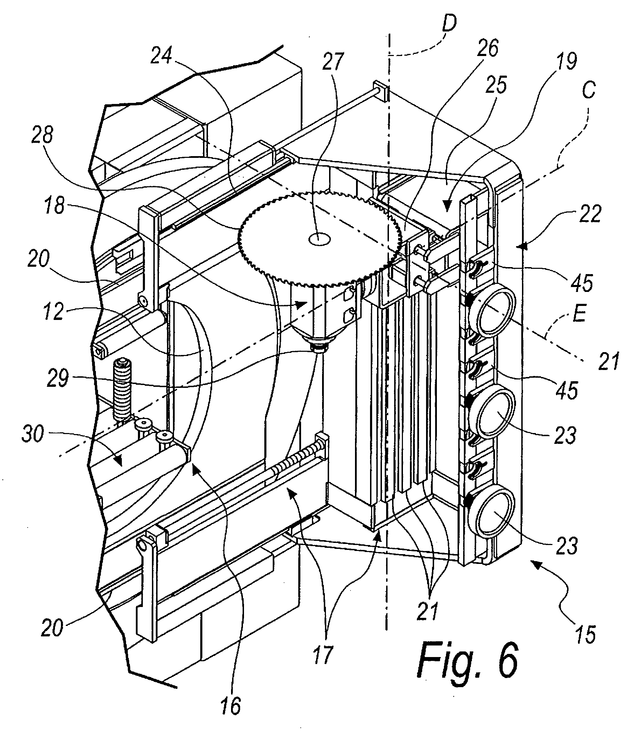

Figure 6 is a further enlarged detailed perspective view of a machining centre according to the invention.

It should be noted that everything that, in the course of the procedure of obtaining the patent, should be found to be prior art, is not intended to be claimed and is intended to be removed from the claims.

With reference to the figures, the reference numeral 10 generally designates a machining centre for beams, particularly for machining wood beams and the like, which comprises at least
- a portal-like shell 11, which has an opening 12 for the passage of a beam 13 to be machined.
- means 14 for the advancement of a beam 13 to be machined, which form an axis A for the insertion of the beam 13 to be machined through the opening 12,
- an apparatus 15 for machining the beam 13.

The apparatus 15 comprises
- a substantially annular base 16, which is supported by the shell 11 so that it can rotate preferably about an insertion axis A, but which, in general, can be rotatable about an axis of rotation that is substantially parallel to the insertion axis A,
- a slider 17, which is supported by the base 16,
- a machining head 18, and
- a sliding block 19, which is supported by the slider 17 and which supports the machining head 18 so that it can rotate about a machining axis B.

It is to be noted that in the description that follows the axis of rotation of the base 16 with respect to the shell 11 is indicated with the reference letter A because, in the embodiment described herein by way of a non-limiting example, it coincides with the insertion axis A.

The slider 17 is supported by the base 16 so that it can slide on it in a first sliding direction C that is substantially transverse to the rotation axis A.

For example, the slider 17 is slideably coupled to first rails 20 that are provided on the base 16.

Moreover, the sliding block 19 is conveniently supported by the slider 17 so that it can slide on it, for example along second rails 21 that are provided on it and which define a second sliding direction D, which is substantially transverse to the first sliding direction C.

Preferably, the machining centre 10, according to the invention, further comprises a tool holder 22, which is adapted to support spare tools 23 for the machining head 18.

Advantageously, the tool holder 22 is associated, advisably by means of third rails 24, with the slider 17 so that it can slide along a direction of adjacent and spaced arrangement with respect to the machining head 18, which advisably coincides with the first sliding direction C and hence hereinafter is indicated with the same reference C.

More specifically, the sliding block 19 preferably comprises
- a frame 25, that can slide on the slider 17, as described, and
- a support 26 for the machining head 18, which is supported by the frame 25 so that it can slide along a direction of translational motion E that is substantially perpendicular to the adjacent and spaced arrangement direction C.

Advantageously, the machining centre 10 is provided with
- a control device, such as for example a programmable computer, and
- positioning means, of a type that is *per se* known, that are piloted by such control device and which are adapted to determine an exact positioning of the slider 17 with respect to the base 16, and of the sliding block 19 and/or of the tool holder 22 with respect to the slider 17, or then again of the support 26 with respect to the frame 25.

Such positioning means can comprise mechanical linear actuators for example of rack and pinion or screw type.

Moreover, the machining centre 10 advisably comprises means for orientation that are piloted by such control device and which are adapted to precisely orientate
- the base 16 with respect to the shell 11, for example by means of a fifth wheel device, and/or
- the machining head 18 with respect to the sliding block 19 that carries it.

Advantageously, the machining head 18 comprises a motor 27 for the actuation of a sawing tool 28 and an electric spindle 29 for mills, which are arranged substantially at opposite sides thereof.

The advancement means 14, in particular, advantageously comprise
- a roller bed 30 for supporting a beam 13 to be machined, which passes inside the opening 12,
- a clamp 31 for the advancement of the beam 13,
- a bracket 32 for supporting the clamp 31, which is fixed to the shell 11 in the opposite position relative to the roller bed 30, with respect to the opening 12.

Moreover, the clamp 31 preferably comprises
- a supporting element 33, which is connected slideably to the bracket 32 by way of guides 34 that form the insertion axis A,
- a fixed jaw 35, which is jointly connected to the supporting element 33,
- a movable jaw 36, which preferably can slide on four rails 37 which are provided on the supporting element 33, so as to be movable in a closing and opening direction F on the fixed jaw 35, in order to fasten onto the beam 13 to be fed through the opening 12.

Preferably there is a rack and pinion device 38, which advantageously is piloted by such control device, and which is adapted to perform a translational motion of the supporting element 33 along the guides 34.

Also, advantageously there are
- an element 40 for gripping the beam 13, which covers at least partially one face 41, of the fixed jaw 35, that is directed toward the movable jaw 36,
- means for spacing, preferably of the pneumatic type, that are adapted to space the grip element 40 from the face 41, and which are not shown in the accompanying figures,
- means, preferably of the pneumatic type, for the return of the grip element 40 that are adapted to draw it into abutment against the face 41, and which are not shown in the accompanying figures.

So, when the beam 13 is to be gripped by the clamp 31 in order to be fed through the opening 12, such spacing means, which are piloted by such control device, space the grip element 40 from the face 41, in contrast with such return means, so as to form a fixed abutment against which the beam is fastened by the movable jaw 36 during closure.

When the movable jaw 36 opens, for example for a repositioning of the clamp 31 along the beam 13, such spacing means are deactivated by such control device so that by the action of such return means, the grip element 40 is returned against the face 41, thus separating from the beam 13.

In this way, the beam 13 is free from both of the jaws 35 and 36, which, carried by the supporting element 33, can move along the beam 13 for example to close upon it again in order to feed it further into the opening 12.

Advantageously, the machining centre 10 also comprises means 41 for guiding the beam 13 through the opening 12, that preferably comprise
- first wheels 42, which are fixed in the opening 12 and which are adapted to form a fixed abutment for one side of the beam 13, i.e. so as to form a zero plane for it,
- second wheels 43, which can move in the opening 12 and are connected to means, such as for example pneumatic actuators not shown in the accompanying figures, that are adapted to their approach and spacing with respect to the first wheels 42, to position the beam 13 in abutment against the first wheels 42,
- a roller presser 44 for retaining the beam 13 on the roller bed 30, which lies opposite such bed and which can be moved adjacent to it so as to comprise the beam 13 to be machined between them.

Preferably, such zero plane, i.e. the locator height of the beam 13 against the first wheels 42, forms the overhang height of the grip element 40 from the face 41.

The roller presser 44 advisably is reversibly movable towards the roller bed 30, for example by means of pneumatic actuators piloted by such control device.

In this way, when the beam 13 has been fed through the opening 12 by the clamp 31, as mentioned, the roller presser 44 is closed towards the roller bed 30 thus locking the beam 13 vertically, while at the same time the second wheels 43 are closed towards the first wheels 42 thus locking the beam 13 horizontally.

The beam, thus locked in place, can be machined by piloting the apparatus 15.

Indeed, by piloting such control device, the head 18 can be positioned so as to machine any one of the sides of the beam 13, as well as its heads, simply by means of an adapted combination of the following movements:
- rotation of the base 16 about the opening 12, with respect to the rotation axis A,
- translational motion of the slider 17 on the base 16 along the first sliding direction C,
- translational motion of the sliding block 19 on the slider 17 along the second sliding direction D and
- rotation of the head 18 about the machining axis B.

Moreover, when it is necessary to change the tool in use in the electric spindle 29, such control device pilots the orientation of the electric spindle 29 and the movement of the support 26, with respect to the frame 25, so as to align the electric spindle 29 with the forks 45 of the tool holder 22, in order to de-equip it from the tool in use and re-equip it with a tool 23 to be used, in a manner that is *per se* known.

In practice it has been found that the invention fully achieves the intended aim and objects, providing a machining centre for beams, particularly for machining wood beams and the like, that is structurally simpler than machining centres known today, and also by making possible the machining of all the faces of a beam, as well as of the heads, without requiring the rotation of the beam on the advancement sliders or other supports.

Moreover, a machining centre according to the invention is versatile and easy to use, and can be made at relatively low costs.

The invention thus conceived is susceptible of numerous modifications and variations, all of which are within the scope of the appended claims. Moreover, all the details may be substituted by other, technically equivalent elements.

In practice the materials employed, as well as the dimensions and the contingent shapes, may be any according to requirements and to the state of the art.

The disclosures in Italian Patent Application No. PD2009A000203 from which this application claims priority are incorporated herein by reference.

## Claims

1. A machining centre for beams, particularly for machining wood beams and the like, comprising at least
- a portal-like shell (11), which has an opening (12) for the passage of a beam (13) to be machined;
- means (14) for the advancement of a beam (13) to be machined, which form an axis (A) for the insertion of the beam (13) to be machined through said passage opening (12);
- a base (16), which is rotatably supported by said shell (11);
- a slider (17),
- a machining head (18); and
- a sliding block (19), which is slidably supported by said slider (17) and which rotatably supports said machining head (18) so that said machining head can rotate about a machining axis (B);
said base being an annular base (16) that can rotate with respect to said shell (11) about a rotation axis (A) that is substantially parallel to said insertion axis (A); said annular base (16) being rotatably arranged around said opening (12); **characterized in that** said slider (17) is slidably supported by said base (16) so that it can slide in a first sliding direction (C) that is substantially transverse to said rotation axis (A), said sliding block (19) being further slidably supported by said slider (17) so that it can slide in a second sliding direction (D), which is substantially transverse to said first sliding direction (C).

2. The machining centre according to claim 1, **characterized in that** it comprises a tool holder (22), which is adapted to support spare tools (23) for said machining head (18), said tool holder (22) being associated with said slider (17) so that it can slide along a direction of adjacent and spaced arrangement (C) with respect to said machining head (18).

3. The machining centre according to one or more of the preceding claims, **characterized in that** said sliding block (19) comprises a frame (25), which is functionally connected to said slider (17), and a support (26) for said machining head (18), which is supported by said frame (25) so that it can slide along a direction of translational motion (E) that is substantially perpendicular to said adjacent and spaced arrangement direction (C).

4. The machining centre according to one or more of the preceding claims, **characterized in that** said machining head (18) comprises a motor (27) for the actuation of a sawing tool (28) and an electric spindle (29) for mills, which are arranged substantially at opposite sides thereof.

5. The machining centre according to one or more of the preceding claims, **characterized in that** said advancement means (14) comprise
- a roller bed (30) for supporting a beam (13) to be machined, which passes inside said opening (12),
- a clamp (31) for the advancement of the beam (13),
- a bracket (32) for supporting said clamp (31), which is fixed to said support in the opposite position relative to said roller bed (30), with respect to said opening (12).

6. The machining centre according to claim 5, **characterized in that** said clamp (31) comprises
- a supporting element (33), which is connected slideably to said bracket (32) by way of guides (34) that form said insertion axis (A),
- a fixed jaw (35), which is jointly connected to said supporting element (33),
- a movable jaw (36), which can slide on said supporting element (33) in a closing and opening direction (F) on said fixed jaw (35) in order to fasten onto the beam (13) to be fed through said opening (12).

7. The machining centre according to claim 6, **characterized in that** it comprises
- an element (40) for gripping said beam (13), which covers at least partially one face (41) of said fixed jaw (35) that is directed toward the movable jaw (36).
- means for spacing said grip element (40) from said face (41),
- means for the return of said grip element (40) into abutment against said face (41).

8. The machining centre according to claim 1, **characterized in that** it comprises means (41) for guiding the beam (13) through said opening (12).

9. The machining centre according to claim 8, **characterized in that** said guiding means (41) comprise
- first wheels (42), which are fixed in said opening (12) for the abutment of one side of the beam (13) and form for it a zero plane,
- second wheels (43), which can move in said opening (12) and are connected to means for the approach and spacing of said second wheels (43) with respect to said first wheels (42), in order to arrange said beam (13) in abutment against said first wheels (42),
- a roller presser (44) for retaining said beam (13) on said roller bed (30), which lies opposite said bed and can be moved adjacent to it so as to comprise the beam (13) to be machined between them.

10. The machining centre according to one or more of the preceding claims, **characterized in that** it comprises a control device, which is connected, so as to drive them, at least to
- means for positioning said slider (17) with respect to said base (16), for positioning said sliding block (19) and said tool holder (22) with respect to said slider (17), and for positioning said support (26) with respect to said frame (25),
- means for orienting said base (16) with respect to said shell (11) and for orienting said machining head (18) with respect to said sliding block (19) that carries it,
in order to allow the machining of a beam (13) on all of its faces and at its ends.

## Patentansprüche

1. Eine Bearbeitungsmaschine für Balken, insbesondere zur Bearbeitung von Holzbalken und Ähnlichem, die mindestens Folgendes aufweist:
- ein portalartiges Gehäuse (11), das eine Öffnung (12) für das Hindurchdringen eines zu bearbeitenden Balkens (13) hat;
- Mittel (14) für den Vorschub eines zu bearbeitenden Balkens (13), welche eine Achse (A) zum Einführen des zu bearbeitenden Balkens (13) durch die Durchgangsöffnung (12) bilden;
- eine Basis (16), die drehbar von dem Gehäuse (11) getragen wird;
- einen Schieber (17);
- einen Bearbeitungskopf (18); und
- einen Gleitblock (19), der verschiebbar von dem Schieber (17) getragen wird und den Bearbeitungskopf (18) drehbar trägt, so dass der Bearbeitungskopf sich um eine Bearbeitungsachse (B) drehen kann;
wobei die Basis eine ringförmige Basis (16) ist, die sich im Verhältnis zu dem Gehäuse (11) um eine Drehachse (A) drehen kann, die im Wesentlichen parallel zu der Einführachse (A) ist; wobei die ringförmige Basis (16) drehbar um die Öffnung (12) herum angeordnet ist; **dadurch gekennzeichnet, dass** der Schieber (17) drehbar von der Basis (16) getragen wird, so dass er in einer ersten Gleitrichtung (C) gleiten kann, die im Wesentlichen transversal zu der Drehachse (A) ist, wobei der Gleitblock (19) weiter verschiebbar von dem Schieber (17) getragen wird, so dass er in eine zweite Gleitrichtung (D) gleiten kann, die im Wesentlichen transversal zu der ersten Gleitrichtung (C) ist.

2. Die Bearbeitungsmaschine gemäß Anspruch 1, **dadurch gekennzeichnet, dass** sie einen Werkzeughalter (22) aufweist, der ausgebildet ist, um Ersätzwerkzeuge (23) für den Bearbeitungskopf (18) zu tragen, wobei der Werkzeughalter (22) so mit dem Schieber (17) verbunden ist, dass er entlang einer Richtung benachbarter und beabstandeter Anordnung (C) im Verhältnis zu dem Bearbeitungskopf (18) gleiten kann.

3. Die Bearbeitungsmaschine gemäß einem oder mehreren der obigen Ansprüche, **dadurch gekennzeichnet, dass** der Gleitblock (19) einen Rahmen (25) aufweist, welcher funktionell mit dem Schieber (17) verbunden ist, und einen Träger (26) für den Bearbeitungskopf (18), der von dem Rahmen (25) so getragen wird, dass er entlang einer Richtung einer Translationsbewegung (E) gleiten kann, die im Wesentlichen senkrecht zu der Richtung (C) benachbarter und beabstandeter Anordnung ist.

4. Die Bearbeitungsmaschine gemäß einem oder mehreren der obigen Ansprüche, **dadurch gekennzeichnet, dass** der Bearbeitungskopf (18) einen Motor (27) für die Betätigung eines Sägewerkzeugs (28) und einer elektrischen Spindel (29) für Mühlen aufweist, die im Wesentlichen an entgegengesetzten Seiten davon angeordnet sind.

5. Die Bearbeitungsmaschine gemäß einem oder mehreren der obigen Ansprüche, **dadurch gekennzeichnet, dass** die Vorschubmittel (14) Folgendes aufweisen:
- einen Rollgang (30) zum Tragen eines zu bearbeitenden Balkens (13), der die Öffnung (12) passiert;
- eine Klemme (31) für den Vorschub des Balkens (13);
- einen Arm (32) zum Tragen der Klemme (31), der an dem Träger in der dem Rollgang (30), mit Bezug auf die Öffnung (12), gegenüberliegenden Position befestigt ist.

6. Die Bearbeitungsmaschine gemäß Anspruch 5, **dadurch gekennzeichnet, dass** die Klemme (31) Folgendes aufweist:
- ein tragendes Element (33), das durch Führungen (34), welche die Einführachse (A) bilden, verschiebbar mit dem Arm (32) verbunden ist,
- eine feste Backe (35), die fest mit dem tragenden Element (33) verbunden ist,
- eine bewegliche Backe (36), die auf dem tragenden Element (33) in einer Schließ- und Öffnungsrichtung (F) auf der festen Backe (35) gleiten kann, um auf den Balken (13) zu befestigen, der durch die Öffnung (12) eingeführt werden soll.

7. Die Bearbeitungsmaschine gemäß Anspruch 6, **dadurch gekennzeichnet, dass** sie Folgendes aufweist:
- ein Element (40) zum Greifen des Balkens (13), das mindestens teilweise eine Fläche (41) der festen Backe (35) bedeckt, die der beweglichen Backe (36) zugewandt ist,
- Mittel zum Beabstanden des Greifelements (40) von der Fläche (41),
- Mittel zur Rückkehr des Greifelements (40) in eine an die Fläche (41) anstoßende Position.

8. Die Bearbeitungsmaschine gemäß Anspruch 1, **dadurch gekennzeichnet, dass** sie Mittel (41) aufweist, um den Balken (13) durch die Öffnung (12) zu führen.

9. Die Bearbeitungsmaschine gemäß Anspruch 8, **dadurch gekennzeichnet, dass** die Führungsmittel (41) Folgendes aufweisen:
- erste Räder (42), die zum Anstoßen einer Seite des Balkens (13) in der Öffnung (12) befestigt sind und für ihn eine Nullebene bilden,
- zweite Räder (43), die sich in der Öffnung (12) bewegen können und mit Mitteln zur Annäherung und Beabstandung der zweiten Räder (43) im Verhältnis zu den ersten Rädern (42) verbunden sind, um den Balken (13) anstoßend gegen die ersten Räder (42) anzuordnen,
- eine Walzenpresse (44) zum Halten des Balkens (13) auf dem Rollgang (30), die dem Rollgang gegenüberliegt und zu ihm hin bewegt werden kann, um den zu bearbeitenden Balken (13) zwischen sich einzuschließen.

10. Die Bearbeitungsmaschine gemäß einem oder mehreren der obigen Ansprüche, **dadurch gekennzeichnet, dass** sie eine Steuervorrichtung aufweist, die, um sie zu steuern, mindestens verbunden ist mit
- Mitteln zur Positionierung des Schiebers (17) im Verhältnis zu der Basis (16), zur Positionierung des Gleitblocks (19) und des Werkzeughalters (22) im Verhältnis zu dem Schieber (17) und zur Positionierung des Trägers (26) im Verhältnis zu dem Rahmen (25),
- Mitteln zur Ausrichtung der Basis (16) im Verhältnis zu dem Gehäuse (11) und zur Ausrichtung des Bearbeitungskopfs (18) im Verhältnis zu dem Gleitblock (19), der ihn trägt,
um die Bearbeitung eines Balkens (13) an all seinen Flächen und an seinen Enden zu ermöglichen.

## Revendications

1. Machine d'usinage de poutres, destiné en particulier à usiner des poutres en bois et similaires, comprenant au moins
- une coque de type portique (11), qui comporte une ouverture (12) pour le passage d'une poutre (13) à usiner ;
- des moyens (14) d'avancement d'une poutre (13) à usiner, qui forment un axe (A) pour l'insertion de la poutre (13) à usiner à travers ladite ouverture de passage (12) ;
- une base (16), qui est supportée en rotation par ladite coque (11) ;
- un coulisseau (17) ;
- une tête d'usinage (18) ; et
- un bloc coulissant (19), qui est supporté en coulissement par ledit coulisseau (17) et qui supporte en rotation ladite tête d'usinage (18) de sorte que ladite tête d'usinage puisse tourner autour d'un axe d'usinage (B) ;
ladite base étant une base annulaire (16) qui peut tourner par rapport à ladite coque (11) autour d'un axe de rotation (A) qui est sensiblement parallèle audit axe d'insertion (A) ; ladite base annulaire (16) étant agencée en rotation autour de ladite ouverture (12) ; **caractérisé en ce que** ledit coulisseau (17) est supporté en coulissement par ladite base (16) de façon à pouvoir coulisser dans une première direction de coulissement (C) qui est sensiblement transversale audit axe de rotation (A), ledit bloc coulissant (19) étant en outre supporté en coulissement par ledit coulisseau (17) de façon à pouvoir coulisser dans une seconde direction de coulissement (D), qui est sensiblement transversale à ladite première direction de coulissement (C).

2. Machine d'usinage selon la revendication 1, **caractérisé en ce qu'**il comprend un porte-outil (22), qui est adapté pour supporter des outils de rechange (23) pour ladite tête d'usinage (18), ledit porte-outil (22) étant associé audit coulisseau (17) de façon à pouvoir coulisser le long d'une direction d'agencement adjacent et espacé (C) par rapport à ladite tête d'usinage (18).

3. Machine d'usinage selon une ou plusieurs des revendications précédentes, **caractérisé en ce que** ledit bloc coulissant (19) comprend un châssis (25), qui est raccordé fonctionnellement audit coulisseau (17), et un support (26) pour ladite tête d'usinage (18), qui est supporté par ledit châssis (25) de façon à pouvoir coulisser le long d'une direction de mouvement de translation (E) qui est sensiblement perpendiculaire à ladite direction d'agencement adjacent et espacé (C).

4. Machine d'usinage selon une ou plusieurs des revendications précédentes, **caractérisé en ce que** ladite tête d'usinage (18) comprend un moteur (27) pour l'activation d'un outil de sciage (28) et une broche électrique (29) pour des fraiseuses, qui sont agencés sensiblement à des côtés opposés de celle-ci.

5. Machine d'usinage selon une ou plusieurs des revendications précédentes, **caractérisé en ce que** lesdits moyens d'avancement (14) comprennent
- une plate-forme à galet (30) pour supporter une poutre (13) à usiner, qui passe à l'intérieur de ladite ouverture (12),
- un dispositif de serrage (31) pour l'avancement de la poutre (13),
- une console (32) pour supporter ledit dispositif de serrage (31), qui est fixée audit support dans la position opposée relativement à ladite plate-forme à galet (30), par rapport à ladite ouverture (12).

6. Machine d'usinage selon la revendication 5, **caractérisé en ce que** ledit dispositif de serrage (31) comprend
- un élément de support (33), qui est raccordé en coulissement à ladite console (32) au moyen de guides (34) qui forment ledit axe d'insertion (A),
- une mâchoire fixe (35) qui est raccordée conjointement audit élément de support (33),
- une mâchoire mobile (36), qui peut coulisser sur ledit élément de support (33) dans une direction de fermeture et d'ouverture (F) sur ladite mâchoire fixe (35) afin de s'arrimer sur la poutre (13) à fournir à ladite ouverture (12).

7. Machine d'usinage selon la revendication 6, **caractérisé en ce qu'**il comprend
- un élément (40) de préhension de ladite poutre (13), qui recouvre au moins partiellement une face (41) de ladite mâchoire fixe (35) qui est dirigée vers la mâchoire mobile (36),
- un moyen d'écartement dudit élément de préhension (40) depuis ladite face (41),
- un moyen de renvoi dudit élément de préhension (40) en butée contre ladite face (41).

8. Machine d'usinage selon la revendication 1, **caractérisé en ce qu'**il comprend des moyens (41) de guidage de la poutre (13) à travers ladite ouverture (12).

9. Machine d'usinage selon la revendication 8, **caractérisé en ce que** lesdits moyens de guidage (41) comprennent
- des premières roues (42), qui sont fixées dans ladite ouverture (12) pour la butée d'un côté de la poutre (13) et forment pour elle un plan nul,
- des secondes roues (43), qui peuvent se déplacer dans ladite ouverture (12) et qui sont raccordées au moyen d'approche et d'écartement desdites secondes roues (43) par rapport auxdites premières roues (42), afin d'agencer ladite poutre (13) en butée contre lesdites premières roues (42),
- un presseur à galet (44) pour retenir ladite poutre (13) sur ladite plate-forme à galet (30), qui se trouve opposé à ladite plate-forme et peut être déplacé adjacent à celle-ci de façon à comprendre la poutre (13) à usiner entre eux.

10. Machine d'usinage selon une ou plusieurs des revendications précédentes, **caractérisé en ce qu'**il comprend un dispositif de commande, qui est raccordé, de façon à les entraîner, au moins à
- un moyen de positionnement dudit coulisseau (17) par rapport à ladite base (16), de positionnement dudit bloc coulissant (19) et dudit porte-outil (22) par rapport audit coulisseau (17), et de positionnement dudit support (26) par rapport audit châssis (25),
- un moyen d'orientation de ladite base (16) par rapport à ladite coque (11) et d'orientation de ladite tête d'usinage (18) par rapport audit bloc coulissant (19) qui la porte,
afin de permettre l'usinage d'une poutre (13) sur toutes ses faces et à ses extrémités.
